# EUROPEAN PATENT APPLICATION

(11) **EP 4 382 482 A1**
(43) Date of publication of application: **12.06.2024**
(21) Application number: 22876125.0
(22) Date of filing: 26.09.2022
(51) Int. Cl.: C01D 15/02

(54) **METHOD FOR PRODUCING LITHIUM HYDROXIDE**

(30) Priority: 30.09.2021 JP 2021162009
(71) Applicant: SUMITOMO METAL MINING CO., LTD., Tokyo 105-8716 (JP)
(72) Inventor: TAKANO Masatoshi, Niihama-shi, Ehime 792-0002 (JP); ASANO Satoshi, Niihama-shi, Ehime 792-0002 (JP); HEGURI Shin-ichi, Niihama-shi, Ehime 792-0002 (JP); IKEDA Osamu, Niihama-shi, Ehime 792-0002 (JP); MATSUMOTO Shin-ya, Niihama-shi, Ehime 792-0002 (JP); KUDO Yohei, Niihama-shi, Ehime 792-0002 (JP); MURAKAMI Akihiro, Niihama-shi, Ehime 792-0002 (JP); SENBA Yusuke, Niihama-shi, Ehime 792-0002 (JP); MAEDA Kyohei, Niihama-shi, Ehime 792-0002 (JP)
(74) Representative: Jones, Nicholas Andrew
(86) International application number: PCT/JP2022/035709
(87) International publication number: WO 2023/054258

(57) **Abstract**

To provide a method for producing lithium hydroxide allowing increasing a purity of an obtained lithium hydroxide. The method for producing lithium hydroxide includes a lithium adsorption step, a lithium elution step, an impurity removal step, and a conversion step. The impurity removal step includes: (3A) a carbonating step of a step of adding a carbonic acid source to a second lithium containing solution to obtain rough lithium carbonate; (3B) a hydrocarbonating step of a step of blowing carbon dioxide to a slurry containing rough lithium carbonate to obtain a lithium hydrogen carbonate solution; (3C) a decarbonation step of a step of heating the lithium hydrogen carbonate solution to obtain purified lithium carbonate; and (3D) an acid solution dissolution step of a step of dissolving the purified lithium carbonate in an acid solution to obtain a third lithium containing solution. Since this aspect allows reliably removing a metal other than lithium, the purity of the obtained lithium hydroxide is allowed to be increased.

## Description

### BACKGROUND

### 1. Technical Field

The present invention relates to a method for producing lithium hydroxide. More specifically, the present invention relates to a method for producing lithium hydroxide that allows obtaining high-purity lithium hydroxide.

### 2. Related Art

Recently, as a positive electrode material for an on-vehicle battery, demand for a nickel-based positive electrode material, that is, NCA is expanding. Then, when the nickel-based positive electrode material is used for the on-vehicle battery, it is economically preferred that lithium as a constituent element of the nickel-based positive electrode material is supplied as lithium hydroxide. This lithium hydroxide was produced by, for example, adding slaked lime from lithium carbonate. Tang Weiping, "Lithium Recovery System from brine," [online], June 11, 2010, Kagawa Industry Support Foundation, [November 22, 2018], Internet (www.kagawa-isf.jp/rist/seika-happyou/21tang.pdf) discloses a method for obtaining this lithium carbonate. However, this method for producing the lithium hydroxide from the lithium carbonate had a problem of cost increase.

In contrast to this, Patent Document 1 discloses a method for producing lithium hydroxide that allows obtaining a lithium hydroxide containing solution in which lithium hydroxide is dissolved without through lithium carbonate. This method allows obtaining high-purity lithium hydroxide at a cost lower than that of the method in Non-Patent Document 1.

Patent Document 1: JP-A-2020-193130
Non-Patent Document 1: Tang Weiping, "Lithium Recovery System from brine," [online], June 11, 2010, Kagawa Industry Support Foundation, [November 22, 2018], Internet (https://www.kagawa-isf.jp/wp-content/uploads/2022/02/21tang.pdf)

In JP-A-2020-193130, an impurity removal step is provided before a conversion step, and metal ions are partially removed from a second lithium containing solution in the impurity removal step, thereby increasing the purity of lithium hydroxide as a final product. JP-A-2020-193130 discloses, for example, a case where the impurity removal step includes a neutralization step and an ion-exchange step, and a case where the impurity removal step includes an oxidation step, the neutralization step, and the ion-exchange step.

However, for the positive electrode material for the on-vehicle battery, the purity of lithium hydroxide is desired to be further increased in some cases. In this case, for the lithium hydroxide produced by the producing method of JP-A-2020-193130, there is a problem that the purity of finally obtained lithium hydroxide cannot be increased to a preliminarily determined purity due to remaining of a part of the metal ions.

In consideration of the above-described circumstances, it is an object of the present invention to provide a method for producing lithium hydroxide allowing increasing a purity of obtained lithium hydroxide.

### SUMMARY

A method for producing lithium hydroxide according to a first invention includes steps (1) to (4) below; (1) a lithium adsorption step of bringing a first lithium containing solution into contact with a lithium selective adsorbent to adsorb lithium on the lithium selective adsorbent; (2) a lithium elution step of eluting the lithium from the lithium selective adsorbent on which the lithium is adsorbed to obtain a second lithium containing solution; (3) an impurity removal step of removing a part of metal ions from the second lithium containing solution to obtain a third lithium containing solution; and (4) a conversion step of converting lithium salt contained in the third lithium containing solution into lithium hydroxide to obtain a lithium hydroxide containing solution in which the lithium hydroxide is dissolved. The impurity removal step includes steps (3A) to (3D) below: (3A) a carbonating step of adding a carbonic acid source to the second lithium containing solution to obtain rough lithium carbonate; (3B) a hydrocarbonating step of blowing carbon dioxide to a slurry containing the rough lithium carbonate to obtain a lithium hydrogen carbonate solution; (3C) a decarbonation step of heating the lithium hydrogen carbonate solution to obtain purified lithium carbonate; and (3D) an acid solution dissolution step of dissolving the purified lithium carbonate in an acid solution to obtain a third lithium containing solution.

The method for producing lithium hydroxide according to a second invention, which is in the first invention, includes a neutralization step after the lithium elution step and before the carbonating step in the impurity removal step. The second lithium containing solution used in the carbonating step is a post-neutralization liquid produced by adding a neutralizer in the neutralization step.

The method for producing lithium hydroxide according to a third invention, which is in the first invention, includes an oxidation step and a neutralization step after the lithium elution step and before the carbonating step in the impurity removal step. The second lithium containing solution used in the carbonating step is a post-neutralization liquid produced by adding a neutralizer to a post-oxidation liquid in the neutralization step. The post-neutralization liquid is produced by adding an oxidant in the oxidation step.

The method for producing lithium hydroxide according to a fourth invention, which is in any one of the first invention to the third invention, includes an ion exchange step after the acid solution dissolution step and before the conversion step. The third lithium containing solution used in the conversion step is obtained by bringing the lithium salt solution obtained in the acid solution dissolution step into contact with an ion-exchange resin in the ion exchange step.

The method for producing lithium hydroxide according to a fifth invention, which is in any one of the first invention to the fourth invention, includes a crystallization step of solidifying the lithium hydroxide dissolved in the lithium hydroxide containing solution after the conversion step.

In the method for producing lithium hydroxide according to a sixth invention, which is in any one of the first invention to the fifth invention, a part of or all of the second lithium containing solution is repeatedly used in the lithium elution step.

According to the first invention, in the impurity removal step among the four steps in producing by performing the four steps from the carbonating step to the acid solution dissolution step, a metal other than the lithium can be reliably removed, and therefore a purity of the obtained lithium hydroxide can be increased.

According to the second invention, by providing the neutralization step before the carbonating step, magnesium and manganese contained in the second lithium containing solution can be removed, and a load of impurity removal at and after the carbonating step can be reduced.

According to a third invention, by providing the oxidation step and the neutralization step before the carbonating step, the manganese contained in the second lithium containing solution is removed before the neutralization step, a load of removal of the manganese in the neutralization step can be reduced, accuracy of removal of the magnesium in the neutralization step increases, and further a purity of the obtained lithium hydroxide can be increased.

According to a fourth invention, by providing the ion exchange step before the conversion step, a metal that cannot be removed in a previous step of the ion exchange step can be removed, and further the purity of the obtained lithium hydroxide can be increased.

According to a fifth invention, by providing the crystallization step of solidifying the lithium hydroxide after the conversion step, using a difference in solubility, the lithium hydroxide can be solidified at the high purity.

According to a sixth invention, a part of or all of the second lithium containing solution is repeatedly used in the lithium elution step and the concentration of the lithium contained in the second lithium containing solution can be increased, and therefore an amount of the second lithium containing solution sent to a step subsequent to the lithium elution step can be reduced. Accordingly, a facility capacity of the subsequent step can be decreased, and a cost taken for the facility can be suppressed.

### BRIEF DESCRIPTION OF DRAWINGS

Fig. 1 is a flowchart of an impurity removal step of a method for producing lithium hydroxide according to a first embodiment of the present invention;
Fig. 2 is a flowchart of the method for producing lithium hydroxide according to the first embodiment of the present invention;
Fig. 3 is a flowchart of an impurity removal step of a method for producing lithium hydroxide according to a second embodiment of the present invention; and
Fig. 4 is flowchart of an impurity removal step of a method for producing lithium hydroxide according to a third embodiment of the present invention.

### DETAILED DESCRIPTION

Next, embodiments of the present invention will be described based on the drawings. However, the embodiments described below are to exemplarily describe methods for producing lithium hydroxide for embodying a technical idea of the present invention, and the present invention does not specify the method for producing lithium hydroxide to the following.

The method for producing lithium hydroxide according to the present invention includes the steps (1) to (4) below; (1) a lithium adsorption step: a step of bringing a first lithium containing solution into contact with a lithium selective adsorbent to adsorb lithium on the lithium selective adsorbent; (2) a lithium elution step: a step of eluting the lithium from the lithium selective adsorbent on which the lithium is adsorbed to obtain a second lithium containing solution; (3) an impurity removal step: a step of removing a part of metal ions from the second lithium containing solution to obtain a third lithium containing solution; and (4) a conversion step: a step of converting lithium salt contained in the third lithium containing solution into lithium hydroxide to obtain a lithium hydroxide containing solution in which the lithium hydroxide is dissolved. The impurity removal step includes steps (3A) to (3D) below: (3A) a carbonating step: a step of adding a carbonic acid source to the second lithium containing solution to obtain rough lithium carbonate; (3B) a hydrocarbonating step: a step of blowing carbon dioxide to a slurry containing the rough lithium carbonate to obtain a lithium hydrogen carbonate solution; (3C) a decarbonation step: a step of heating the lithium hydrogen carbonate solution to obtain purified lithium carbonate; and (3D) an acid solution dissolution step: a step of dissolving the purified lithium carbonate in an acid solution to obtain a third lithium containing solution.

With the present invention, in the impurity removal step, by performing the four steps from the carbonating step to the acid solution dissolution step, a metal other than the lithium can be reliably removed, and therefore a purity of the obtained lithium hydroxide can be increased.

The method for producing lithium hydroxide preferably includes a neutralization step after the lithium elution step and before the carbonating step in the impurity removal step. The second lithium containing solution used in the carbonating step is preferably a post-neutralization liquid produced by adding a neutralizer in the neutralization step. Accordingly, magnesium and manganese contained in the second lithium containing solution can be removed, and a load of impurity removal at and after the carbonating step can be reduced.

The method for producing lithium hydroxide preferably includes an oxidation step and a neutralization step after the lithium elution step and before the carbonating step in the impurity removal step. The second lithium containing solution used in the carbonating step is preferably a post-neutralization liquid produced by adding a neutralizer to a post-oxidation liquid in the neutralization step, which is produced by adding an oxidant in the oxidation step. Accordingly, the manganese contained in the second lithium containing solution is removed before the neutralization step, a load of removal of the manganese in the neutralization step can be reduced, accuracy of removal of the magnesium in the neutralization step increases, and further a purity of the obtained lithium hydroxide can be increased.

The method for producing lithium hydroxide preferably includes an ion exchange step after the acid solution dissolution step and before the conversion step. The third lithium containing solution used in the conversion step is preferably obtained by bringing the lithium salt solution obtained in the acid solution dissolution step into contact with an ion-exchange resin in the ion exchange step. A metal that cannot be removed in a previous step of the ion exchange step can be removed, and further the purity of the obtained lithium hydroxide can be increased.

A crystallization step of solidifying the lithium hydroxide dissolved in the lithium hydroxide containing solution is preferably provided after the conversion step. Accordingly, using a difference in solubility, the lithium hydroxide can be solidified at the high purity.

A part of or all of the second lithium containing solution is preferably repeatedly used in the lithium elution step. Accordingly, an amount of the second lithium containing solution sent to a step subsequent to the lithium elution step can be reduced. Accordingly, a facility capacity of the subsequent step can be decreased, and a cost taken for the facility can be suppressed.

### (First Embodiment)

### <Lithium Adsorption Step>

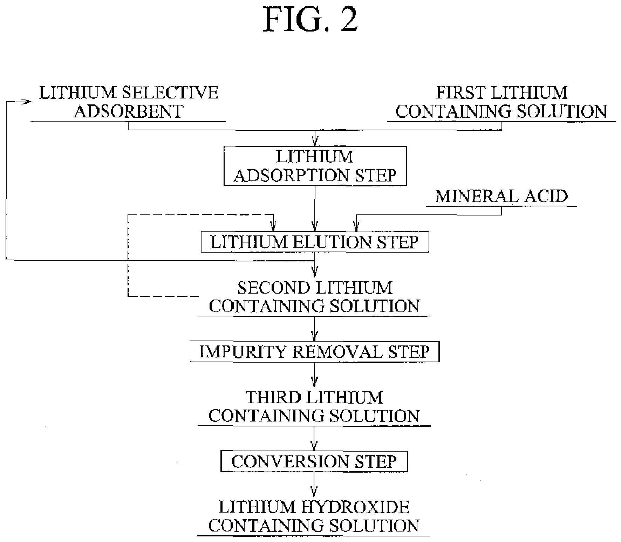

Fig. 2 depicts a method for producing lithium hydroxide according to the first embodiment of the present invention. As shown in Fig. 2, the lithium adsorption step is a step of bringing a lithium selective adsorbent into contact with a first lithium containing solution having a comparatively low lithium concentration, such as salt lake brine, and causes the lithium selective adsorbent to selectively adsorb lithium from the first lithium containing solution. A reaction equation in the lithium adsorption step is indicated as Formula 1. While the reaction equation using H_{1.6}Mn_{1.6}O₄ as the lithium selective adsorbent is indicated here, the reaction equation is not specifically limited to this. For example, a lithium selective adsorbent obtained from lithium manganate having a spinel structure can be used. These lithium selective adsorbents are preferably manganese oxides obtained by bringing lithium manganate into contact with acid and desorbing lithium in the lithium manganate.

[Formula 1] H_{1.6}Mn_{1.6}O₄ + 1.6LiCl → Li_{1.6}Mn_{1.6}O₄ + 1.6HCl

The method for bringing them into contact is not specifically limited. For example, the column method and the batch mixing method correspond to the method for contacting. In the column method, when the lithium selective adsorbent is used as a fine powder, a liquid flow resistance is high and continuously flowing the liquid is often difficult. Therefore, it is preferred to use a pellet formed by kneading a lithium selective adsorbent (including a case of a precursor before becoming the lithium selective adsorbent) and a binder, such as an alumina binder, and sintering it.

In the lithium adsorption step, the pH of the first lithium containing solution is preferably 3 or more and 10 or less. Since the reaction in the lithium adsorption step is a reaction in which lithium is adsorbed to generate acid, when the pH of the aqueous solution is low, the rate of reaction decreases or the reaction itself does not occur in some cases. Therefore, it is preferred to increase the pH of the first lithium containing solution before bringing the first lithium containing solution into contact with the lithium selective adsorbent. However, when the first lithium containing solution contains magnesium, the excessively high pH precipitates magnesium hydroxide, and the adsorption reaction of lithium is physically inhibited when the magnesium hydroxide covers a surface of the lithium selective adsorbent. Especially, when the column method is employed as the method for contacting, obstructions are more generated in the column by magnesium hydroxide. In view of them, the pH of the first lithium containing solution is preferably 10 or less.

When the pH is 3 or less after the liquid passes through the column, the lower portion of the column possibly fails to efficiently adsorb lithium. In a circulation method, it is preferred to add a neutralizer to the liquid flowed out after passing through the column to adjust the pH in the above-described range, and then return it to the column. When the column method is used, it is only necessary to change the liquid passing rate depending on the required throughput. When precipitates are generated after the neutralization, the liquid can be smoothly passed through the column by the use of a filtration device, such as a filter press or a check filter, as necessary.

After the adsorption operation, for performing the lithium elution step as the next step, the lithium selective adsorbent after lithium adsorption is cleaned with water, as necessary. In the case of the liquid passing through the column, a distilled water having a relatively high purity or the like is passed through the column after passing through of the first lithium containing solution, thereby performing an extrusion cleaning of the internally remaining first lithium containing solution. In the case of the batch mixing, the lithium selective adsorbent after lithium adsorption is poured with water after the solid-liquid separation, thereby removing the attached first lithium containing solution.

### <Lithium Elution Step>

As shown in Fig. 2, in the lithium elution step, the lithium selective adsorbent in which lithium is adsorbed is brought into contact with mineral acid, such as hydrochloric acid, to obtain the second lithium containing solution. The lithium selective adsorbent after the lithium adsorption has a form of, for example, lithium manganate, and lithium is eluted by bringing the lithium selective adsorbent after the lithium adsorption into contact with mineral acid, such as hydrochloric acid. While the method for contacting is generally the column method, the batch mixing method may be employed, and any contacting method is possible. Formula 2 is a reaction equation in the lithium elution.

[Formula 2] Li_{1.6}Mn_{1.6}O₄ + 1.6HCl → H_{1.6}Mn_{1.6}O₄ + 1.6LiCl

Here, while the lithium manganate is indicated as Li_{1.6}Mn_{1.6}O₄, the lithium manganate is not specifically limited to it. For example, a lithium selective adsorbent obtained from lithium manganate having a spinel structure can be used. While it is only necessary that the concentration of the mineral acid has an amount enough for eluting the lithium, the lithium manganate is dissolved to be worn away when the concentration is excessively high. In addition, the lithium is not eluted when the concentration is excessively low. As the mineral acid, hydrochloric acid, sulfuric acid, or nitric acid can be used. In a case of using any of these acids, the acid concentration is preferably 0.3 mol/L or more and 2.0 mol/L or less. When the column method is used, it is only necessary to change the liquid passing rate depending on the required throughput.

An eluent, that is, the second lithium containing solution, obtained in this step contains a small amount of accompanying sodium, potassium, magnesium, and calcium in the lithium adsorption step. Manganese eluted from the lithium selective adsorbent is also contained. In addition, when a granulated body using an alumina binder is used as the lithium selective adsorbent, the second lithium containing solution contains aluminum. Among these impurities, polyvalent metals other than sodium or potassium are removed by impurity removal step because they cause a trouble, such as decreased product lifetime of the membrane in the following conversion step. Note that the lithium selective adsorbent after lithium adsorption returns to the lithium selective adsorbent by the elution operation, and has become a state where lithium can be adsorbed again. Therefore, reusing in the lithium adsorption step is allowed. In the case of reusing, the lithium selective adsorbent is preferably cleaned with water.

Additionally, by supplementing acid to this second lithium containing solution to set free acid to be in the range of from 0.3 mol/L or more and 2.0 mol/L or less, the second lithium containing solution can be used instead of the mineral acid used in the lithium elution step. Repeatedly using the second lithium containing solution thus obtained in the lithium elution step again in the lithium elution step allows increasing the lithium concentration in the second lithium containing solution, and the liquid amount of the second lithium containing solution used in the following impurity removal step can be reduced. This allows decreasing a facility capacity in the step at and after the impurity removal step, and a facility cost and a running cost of, for example, chemical liquid can be reduced.

### <Impurity Removal Step>

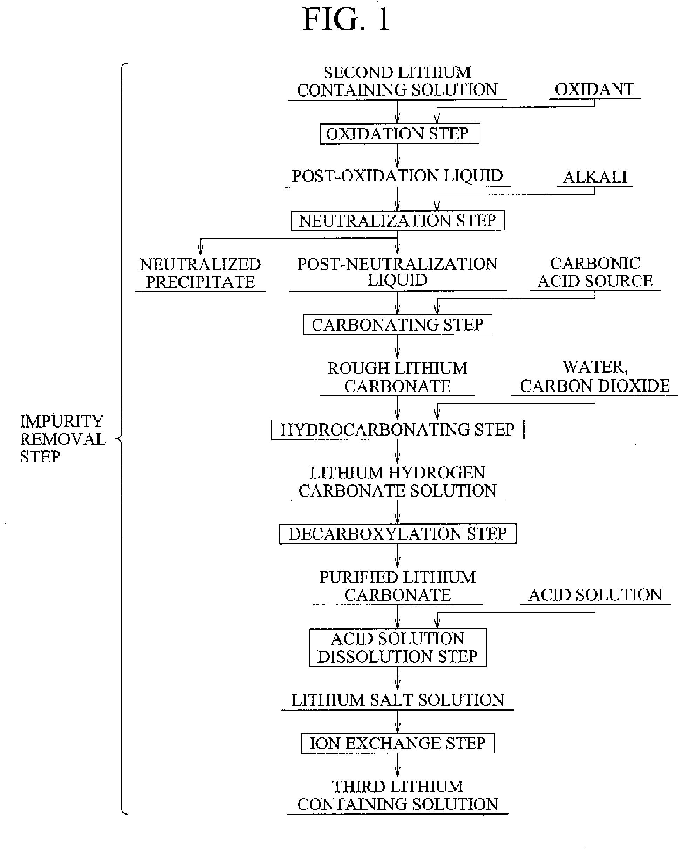

As shown in Fig. 2, in the impurity removal step, the metal ions are partially removed from the second lithium containing solution to obtain a third lithium containing solution. Additionally, Fig. 1 depicts a flowchart showing a structure of the impurity removal step according to this embodiment. In this embodiment, the impurity removal step includes an oxidation step, a neutralization step, a carbonating step, a hydrocarbonating step, a decarbonation step, an acid solution dissolution step, and an ion exchange step. Note that the impurity removal step is not limited to the structure shown here.

### <Oxidation Step in Impurity Removal Step>

As shown in Fig. 1, the oxidation step is a step of adding an oxidant, such as air, oxygen, or sodium hypochlorite, to the second lithium containing solution obtained in the lithium elution step to oxidize manganese in the second lithium containing solution and obtain insoluble manganese dioxide, thereby precipitating to remove the manganese dissolved in the liquid. While the manganese is removable also in the neutralization step described later, the manganese is removed before the neutralization step by providing the oxidation step. Therefore, the load of removing the manganese in the neutralization step can be reduced. The manganese precipitated to be removed in the oxidation step is reusable. As the type of the oxidant used in the oxidation step, air, oxygen, sodium hypochlorite, or the like can be employed. The second lithium containing solution has a redox potential set to a pH and an electric potential in a region of manganese dioxide in a Pourbaix diagram. Note that, as described in a second embodiment and a third embodiment described later, the oxidation step can be omitted.

### <Neutralization Step in Impurity Removal Step>

As shown in Fig. 1, in the neutralization step, addition of alkali to the post-oxidation liquid allows obtaining post-neutralization liquid and also obtaining a neutralized precipitate containing impurities. In the neutralization step, the added alkali increases the pH, and mainly the magnesium becomes a hydroxide and precipitates as a neutralized precipitate. Simultaneously, the manganese is also removed as a hydroxide. To precipitate and remove the magnesium and the manganese, the liquid only needs to be alkaline. However, excessively high pH increases a cost for a neutralizer, which is not preferred. Accordingly, the pH of the post-neutralization liquid after the neutralization step is preferably 8.5 or more and 12 or less. Note that the neutralization step can be omitted as in the third embodiment described later.

### <Carbonating Step in Impurity Removal Step>

As shown in Fig. 1, in the carbonating step, by adding a carbonic acid source, such as sodium carbonate, to the post-neutralization liquid, the lithium in the post-neutralization liquid is precipitated as rough lithium carbonate. Solid-liquid separation is performed on this to separate it into the precipitated rough lithium carbonate and supernatant. Thus, an alkali metal, such as sodium or potassium and an anionic component, such as boron, contained in the supernatant are removed.

While the sodium carbonate is used as the carbonic acid source in this embodiment, the carbonic acid source is not limited to this. For example, carbonate of an alkali metal, such as potassium carbonate, can be used.

Additionally, while the post-neutralization liquid is held at 80°C and the carbonating step is performed in this embodiment, the carbonating step is not limited to this. The carbonating step can be performed at room temperature. The increase in the temperature of the post-neutralization liquid decreases solubility of the lithium carbonate to be precipitated, and therefore the liquid temperature is preferably increased so as not to be boiled. For example, the carbonating step is preferably performed in the range of from 70°C or more to 90°C or less.

The amount of carbonic acid source is preferably determined appropriately corresponding to the amount of lithium contained in the post-neutralization liquid. The upper limit thereof is preferably determined according to the solubility of carbonic acid source.

### <Hydrogen Carbonate Conversion Step in Impurity Removal Step>

As shown in Fig. 1, in the hydrocarbonating step, the recovered rough lithium carbonate is added to water to be a slurry, and then the slurry is blown with carbon dioxide. As shown in Formula 3, the rough lithium carbonate reacts with the carbon dioxide and the water to be converted into lithium hydrogen carbonate having high solubility, thus obtaining a lithium hydrogen carbonate solution. That is, the lithium hydrogen carbonate is dissolved in liquid to turn into the lithium hydrogen carbonate solution, and the other insoluble impurities turn into a solid. For example, this impurity is calcium carbonate. By thus performing solid-liquid separation, the calcium carbonate as impurities or the like can be removed.

[Formula 3] Li₂CO₃ + CO₂ + H₂O → 2LiHCO₃

In the hydrocarbonating step according to this embodiment, the temperature is preferably set to be 20°C or more and 40°C or less. Additionally, the amount of carbon dioxide to be blown is preferably an amount immediately before the unreacted and irresolvable carbon dioxide turns into air bubbles and starts exiting.

### <Decarbonation Step in Impurity Removal Step>

As shown in Fig. 1 and Formula 4, in the decarbonation step, by heating the lithium hydrogen carbonate solution, the lithium hydrogen carbonate is converted into purified lithium carbonate having low solubility, and the purified lithium carbonate is precipitated again to obtain the purified lithium carbonate. Since the post-neutralization liquid obtained in the neutralization step contains sodium at high concentration, the rough lithium carbonate obtained in the carbonating step contains a large amount of sodium. Thus, to reduce this sodium concentration, the lithium carbonate in the rough lithium carbonate is dissolved as the lithium hydrogen carbonate having high solubility in the hydrocarbonating step. Afterwards, the lithium hydrogen carbonate is turned into lithium carbonate again as the form of the purified lithium carbonate in the decarbonation step to precipitate the purified lithium carbonate. The sodium is almost removed from the precipitated purified lithium carbonate, and the purity of the purified lithium carbonate can be increased. The purified lithium carbonate as the precipitate and the supernatant are separated into solid and liquid, thus allowing obtaining the purified lithium carbonate as a solid material.

[Formula 4] 2LiHCO₃ → Li₂CO₃ + CO₂ + H₂O

While the decarbonation step according to this embodiment is performed at 80°C, the decarbonation step is not limited to this. For example, the decarbonation step is preferably performed at 60°C or more and 90°C or less. The heating method is not specifically limited, and a method according to a scale of a reaction container is preferably employed. For example, a Teflon (registered trademark) heater and a steam heating can be employed. Additionally, in the solid-liquid separation in the decarbonation step according to this embodiment, a filter press is preferably used.

### <Acid Solution Dissolution Step in Impurity Removal Step>

As shown in Fig. 1, in the acid solution dissolution step, the purified lithium carbonate obtained in the decarbonation step is dissolved with an acid solution to obtain a lithium salt solution. The use of the lithium carbonate for the subsequent conversion step causes two problems: the low solubility of the lithium carbonate allows only conversion with thin liquid, and efficiency is poor (the size of facility becomes large with respect to throughput); and carbonic acid gas is possibility generated during conversion, possibly damaging the membrane. To solve these problems, the purified lithium carbonate is dissolved with an acid solution to turn into a lithium salt solution. Since the pH decreases after the acid solution dissolution, adjusting the pH to the pH appropriate for impurity removal is preferred in the ion exchange step. Note that the acid used in the acid solution dissolution step is hydrochloric acid, sulfuric acid, nitric acid, and the like. Hydrochloric acid is used in this embodiment, and a lithium salt solution and a lithium chloride solution are obtained in the acid solution dissolution step. Formula 5 shows a chemical reaction formula.

[Formula 5] Li₂CO₃ + 2HCl → 2LiCl + H₂O + CO₂

Note that since the pH needs to be increased in the ion exchange step described later, the amount of acid solution used in the acid solution dissolution step is preferably the minimum necessary amount. For example, the pH is preferably adjusted to be 8.5.

### <Ion Exchange Step in Impurity Removal Step>

As shown in Fig. 1, in the ion exchange step, by bringing the lithium salt solution into contact with ion-exchange resin, a third lithium containing solution from which a part of impurities has been removed is obtained. In the ion exchange step, a metal that cannot be removed in the previous steps of the ion exchange step, for example, calcium that cannot be removed in the neutralization step, the aluminum remaining according to the pH in the neutralization step, and the manganese and the magnesium that cannot be removed in the neutralization step and remain by infinitesimal quantity are removed.

Chelating resin is preferably used as the ion-exchange resin. For example, iminodiacetic acid resin can be used. Specifically, Amberlite IRC748 can be used. A preferred value is determined as the pH of the post-neutralization liquid in the ion exchange step depending on the ion-exchange resin. Note that the ion exchange step is preferably performed directly on the lithium salt solution obtained in the acid solution dissolution step. The method for contacting the ion-exchange resin and the post-neutralization liquid is preferably a column method. However, there may be a case where a batch mixing method is employed. Note that the ion exchange step can be omitted as in the third embodiment described later.

### <Conversion Step>

As shown in Fig. 2, in the conversion step, lithium salt contained in the third lithium containing solution is converted into lithium hydroxide to obtain a lithium hydroxide containing solution in which lithium hydroxide is dissolved. In this embodiment, the lithium salt is lithium chloride. In the third lithium containing solution, the lithium salt is dissolved with the acid used in the acid solution dissolution step in the impurity removal step. In this step, for example, an electrodialysis using a bipolar membrane is performed to convert these aqueous solutions into the lithium hydroxide containing solution containing lithium hydroxide and hydrochloric acid. That is, by performing the electrodialysis, lithium chloride in the third lithium containing solution is decomposed, lithium ions of lithium chloride pass through a cation membrane and bind to hydroxide ions to become lithium hydroxide, and chloride ions pass through an anion membrane to become hydrochloric acid. The recovered hydrochloric acid can be recycled to the elution step. Accordingly, the usage of mineral acid can be reduced.

Note that, for example, an electrodialysis using an ion-exchange membrane corresponds to the conversion step in addition to the electrodialysis using the bipolar membrane. When a cation-exchange membrane is used as the ion-exchange membrane, lithium hydroxide is generated in a cathode chamber.

### (Second Embodiment)

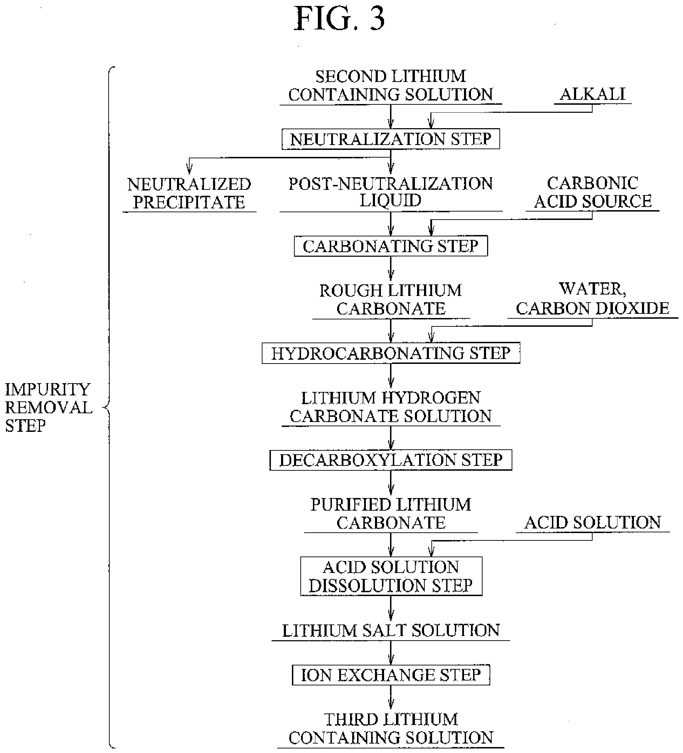

Fig. 3 depicts a flowchart of the impurity removal step of the method for producing lithium hydroxide according to the second embodiment of the present invention. This embodiment differs from the first embodiment in that the oxidation step is not included in the impurity removal step and is otherwise same as the first embodiment. The following describes the neutralization step according to the second embodiment.

### <Neutralization Step in Impurity Removal Step>

As shown in Fig. 3, in the neutralization step, by adding alkali to the second lithium containing solution, post-neutralization liquid and also a neutralized precipitate containing impurities are obtained. In the neutralization step, the added alkali increases the pH, and mainly the magnesium becomes a hydroxide and precipitates as a neutralized precipitate. Simultaneously, the manganese is also removed as a hydroxide. The preferred pH of the post-neutralization liquid is same as that of the first embodiment.

### (Third Embodiment)

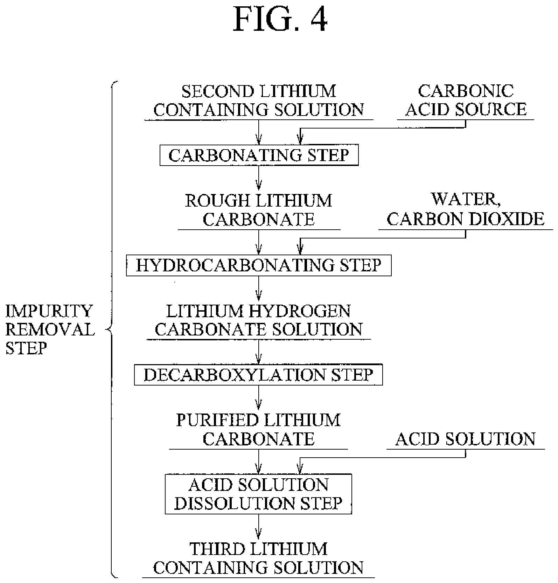

Fig. 4 depicts a flowchart of the impurity removal step of the method for producing lithium hydroxide according to the third embodiment of the present invention. This embodiment differs from the first embodiment in that the impurity removal step does not include the oxidation step, the neutralization step, and the ion exchange step. Otherwise, this embodiment is same as the first embodiment.

### (Others)

### <Crystallization Step>

In all of the embodiments, there may be a case where a crystallization step of solidifying lithium hydroxide dissolved in the lithium hydroxide containing solution is provided after the conversion step.

When the lithium hydroxide containing solution obtained in the conversion step is evaporated to dryness, lithium hydroxide is obtained. However, this lithium hydroxide containing solution contains alkali metals, such as sodium or potassium, and the direct evaporation to dryness causes a solid material obtained from it to contain much hydroxides other than lithium hydroxide. In view of this, the crystallization step of solidifying lithium hydroxide dissolved in the lithium hydroxide containing solution is preferably provided after the conversion step.

In the crystallization step, by solidifying the lithium hydroxide dissolved in the lithium hydroxide containing solution, a solid lithium hydroxide is obtained. A crystallization mother liquor is obtained together with the solid lithium hydroxide. In the conversion step, lithium becomes a lithium hydroxide, and the alkali metals, such as sodium and potassium, become hydroxides. Accordingly, they are also contained in the lithium hydroxide containing solution obtained in the conversion step. Furthermore, chlorine ions as anions also pass through the membrane to be contained in the lithium hydroxide containing solution. In the crystallization step, the difference in solubility between the respective hydroxides is used to solidify the lithium hydroxide and separate contained impurities.

In the crystallization step, the lithium hydroxide containing solution is heated to be concentrated. In this respect, the concentration of metal ions contained in the liquid increases, and lithium hydroxide having a relatively low solubility is deposited and solidified first. The deposited lithium hydroxide is recovered as the solid lithium hydroxide. In this respect, sodium hydroxide or potassium hydroxide having relatively high solubility is not deposited and remains in the aqueous solution. Therefore, the purity of the recovered lithium hydroxide increases.

For example, at 60°C, the solubility of lithium hydroxide is 13.2 g/100 g-water, and it is seen that the solubility of lithium hydroxide is significantly low compared with 174 g/100 g-water of sodium hydroxide and 154 g/100 g-water of potassium hydroxide. Since the chlorine ion is 2 g/L also during the operation of heating to concentrate, the chlorine ion is not deposited as chloride of the alkali metal in the lithium hydroxide.

This step can be industrially performed with a continuous crystallization using a crystallization can. It can be performed also with a batch crystallization. The crystallization mother liquor generated in the crystallization step is a concentrated alkaline aqueous solution. Since the crystallization mother liquor contains lithium hydroxide by an amount of the solubility, repeating the lithium adsorption step increases a lithium recovery rate. In addition, the neutralizer cost decreases.

### [Examples]

The following will describe the specific examples of the method for producing lithium hydroxide according to the present invention. However, the present invention is not limited to the examples.

### <Lithium Adsorption Step>

As the lithium selective adsorbent, H_{1.6}Mm_{1.6}O₄ was used. 500 mL (bulk density: 1.0 g/mL) of this lithium selective adsorbent was filled in a cylindrical column having a capacity of approximately 650 mL, the first lithium containing solution having the concentration shown in Table 1 passed therethrough, and the first lithium containing solution was brought into contact with the lithium selective adsorbent. The temperature was room temperature, the liquid passing rate was SV15, and the liquid passing quantity was BV30. The pH of the first lithium containing solution was approximately 8. Note that the BV is an abbreviation for Bed Volume, and is a unit representing how many times of the volume of the lithium selective adsorbent in the column. In this example, since the capacity of the lithium selective adsorbent is 500 mL, the BV30 is 15 L. Besides, the SV is an abbreviation for Space Velocity and represents a liquid passing quantity BV per unit time (one hour). In this example, SV15 is 7.5 L/h.

**[Table 1]**

| Contained metal | | Li | K | Mg | Na | Ca | B | Mn |
|---|---|---|---|---|---|---|---|---|
| Concentration | g/L | 0.710 | 19.200 | 17.100 | 73.000 | 1.200 | 0.980 | < 0.001 |

### <Lithium Elution Step>

In the lithium elution step, first, the lithium selective adsorbent into which lithium was adsorbed was cleaned with water in the lithium adsorption step. Then, 0.5 mol/L of a hydrochloric acid aqueous solution passed therethrough and the lithium was eluted to obtain a second lithium containing solution. After water cleaning, the lithium selective adsorbent was further repeatedly eluted. During this repetition, the one obtained by supplementing hydrochloric acid to the eluent obtained before the repetition, that is, the second lithium containing solution obtained before the repetition and adjusting the resultant such that the free acid concentration became 0.5 mol/L was used. Table 2 shows the composition of the second lithium containing solution when this operation was repeated 10 times. As apparent from the table, it was found that the lithium selective adsorbent used in this example allowed selectively recovering the lithium.

**[Table 2]**

| Contained metal | | Li | K | Mg | Na | Ca | B | Mn |
|---|---|---|---|---|---|---|---|---|
| Concentration | g/L | 6.500 | 0.260 | 0.600 | 0.270 | 0.590 | 0.017 | 0.093 |

### <Oxidation Step in Impurity Removal Step>

In the oxidation step, a sodium hydroxide aqueous solution having a molar concentration of 8 mol/L as a neutralizer and sodium hypochlorite having an effective concentration of 12% as an oxidant were added to the second lithium containing solution such that the pH of the liquid became 5 and the redox potential became 730 mV at a silver-silver chloride electrode to obtain a post-oxidation liquid. All of these steps were performed at a room temperature (20°C). Table 3 shows the composition of the contained metals in this post-oxidation liquid. It can be seen that the content of the manganese decreases in the post-oxidation liquid.

**[Table 3]**

| Contained metal | | Li | K | Mg | Na | Ca | B | Mn |
|---|---|---|---|---|---|---|---|---|
| Concentration | g/L | 6.300 | 0.260 | 0.570 | 2.100 | 0.580 | 0.017 | < 0.001 |

### <Neutralization Step in Impurity Removal Step>

In the neutralization step, sodium hydroxide having a molar concentration of 8 mol/L as the neutralizer was added to the post-oxidation liquid and the pH was adjusted to be 11 to obtain post-neutralization liquid. All of these steps were performed at room temperature. Table 4 shows the composition of the contained metals in this post-neutralization liquid. It can be seen that the contents of the magnesium and the manganese decrease in the post-neutralization liquid.

**[Table 4]**

| Contained metal | | Li | K | Mg | Na | Ca | B | Mn |
|---|---|---|---|---|---|---|---|---|
| Concentration | g/L | 6.300 | 0.260 | < 0.001 | 3.400 | 0.530 | 0.016 | < 0.001 |

### <Carbonating Step in Impurity Removal Step>

In the carbonating step, sodium carbonate as a carbonic acid source was added to the post-neutralization liquid such that the weight concentration became 200 g/L and solid-liquid separation was performed to obtain rough lithium carbonate. This step was performed at the temperature of 80°C. Table 5 shows the impurity concentrations in this rough lithium carbonate. It can be seen that the concentrations of the impurities of potassium, sodium, and boron are low.

**[Table 5]**

| Contained metal | | K | Mg | Na | Ca | B | Mn |
|---|---|---|---|---|---|---|---|
| Concentration | ppm | 120 | 540 | 10000 | 55000 | 22 | < 10 |

### <Hydrogen Carbonate Conversion Step in Impurity Removal Step>

In the hydrocarbonating step, the rough lithium carbonate obtained in the carbonating step was added to water to obtain a slurry containing the rough lithium carbonate. Then, carbon dioxide was blown to this slurry to obtain a lithium hydrogen carbonate solution. The flow rate was adjusted to the extent that air bubbles of the unreacted and irresolvable carbon dioxide were slightly generated. This step was performed at the room temperature (20°C).

### <Decarbonation Step in Impurity Removal Step>

In the decarbonation step, the lithium hydrogen carbonate solution obtained in the hydrocarbonating step was heated to 80°C to obtain the purified lithium carbonate. Table 6 shows the impurity concentrations in this purified lithium carbonate. It can be seen that, compared with Table 5, all of the impurities decrease and the sodium especially decreases.

**[Table 6]**

| Contained metal | | K | Mg | Na | Ca | B | Mn |
|---|---|---|---|---|---|---|---|
| Concentration | ppm | < 20 | < 10 | <10 | 120 | < 10 | < 10 |

### <Acid Solution Dissolution Step in Impurity Removal Step>

In the acid solution dissolution step, the purified lithium carbonate obtained in the decarbonation step was dissolved in the hydrochloric acid to obtain a lithium chloride aqueous solution. During dissolution, the additive amounts of the hydrochloric acid and the purified lithium carbonate were adjusted such that the pH of the dissolution liquid became 8.5. This step was performed at the room temperature (20°C). By this operation, a lithium chloride solution having a lithium concentration of 24 g/L was obtained. Table 7 shows the composition of the contained metals in this lithium chloride solution. It can be seen that, compared with the post-neutralization liquid in Table 4, in the lithium chloride solution, while the lithium was concentrated, the contents of the potassium, the sodium, and the boron significantly decrease.

**[Table 7]**

| Contained metal | | Li | K | Mg | Na | Ca | B | Mn |
|---|---|---|---|---|---|---|---|---|
| Concentration | g/L | 24.000 | 0.003 | 0.003 | 0.009 | 0.012 | < 0.001 | < 0.001 |

### <Ion Exchange Step in Impurity Removal Step>

In the ion exchange step, the lithium chloride solution obtained in the acid solution dissolution step was caused to pass through a column, in which iminodiacetic acid chelating resin (Amberlite IRC748) was filled, at SV5, and the chelating resin was brought into contact with the lithium chloride solution to obtain the third lithium containing solution. This step was performed at the room temperature (20°C). Table 8 shows the composition of the contained metals in this third lithium containing solution. It can be seen that the contents of the magnesium and the calcium significantly decrease.

**[Table 8]**

| Contained metal | | Li | K | Mg | Na | Ca | B | Mn |
|---|---|---|---|---|---|---|---|---|
| Concentration | g/L | 21.000 | 0.004 | < 0.00005 | 0.008 | < 0.00005 | < 0.001 | < 0.001 |

### <Conversion Step>

In the conversion step, the third lithium containing solution was converted by electrodialysis (manufactured by ASTOM Corporation: ACILYZER EX3B) using a bipolar membrane. That is, lithium chloride as lithium salt contained in the third lithium containing solution was converted into lithium hydroxide to obtain lithium hydroxide containing solution in which the lithium hydroxide was dissolved. This step was performed at the room temperature (20°C). Table 9 shows the composition of the contained metals in this lithium hydroxide containing solution. It can be seen that, similar to the contents shown in Table 8, the impurities significantly decrease.

**[Table 9]**

| Contained metal | | Li | K | Mg | Na | Ca | B | Mn |
|---|---|---|---|---|---|---|---|---|
| Concentration | g/L | 27.000 | 0.008 | < 0.00005 | 0.004 | < 0.00005 | < 0.001 | < 0.001 |

### <Crystallization Step>

In this example, the crystallization step of solidifying the lithium hydroxide was performed. In this crystallization step, the lithium hydroxide containing solution was heated under normal pressure to 90 to 100°C to concentrate it to around two to three times to recover the deposited lithium hydroxide. Note that this crystallization step is not performed in some cases. Table 10 shows the impurity concentrations in the lithium hydroxide obtained in this crystallization step. It can be seen that all of the impurities significantly decrease.

**[Table 10]**

| Contained metal | | K | Mg | Na | Ca | B | Mn |
|---|---|---|---|---|---|---|---|
| Concentration | ppm | < 20 | < 10 | < 10 | <10 | <10 | <10 |

## Claims

1. A method for producing lithium hydroxide comprising steps (1) to (4) below:
(1) a lithium adsorption step of bringing a first lithium containing solution into contact with a lithium selective adsorbent to adsorb lithium on the lithium selective adsorbent;
(2) a lithium elution step of eluting the lithium from the lithium selective adsorbent on which the lithium is adsorbed to obtain a second lithium containing solution;
(3) an impurity removal step of removing a part of metal ions from the second lithium containing solution to obtain a third lithium containing solution; and
(4) a conversion step of converting lithium salt contained in the third lithium containing solution into lithium hydroxide to obtain a lithium hydroxide containing solution in which the lithium hydroxide is dissolved, wherein
the impurity removal step includes steps (3A) to (3D) below:
(3A) a carbonating step of adding a carbonic acid source to the second lithium containing solution to obtain rough lithium carbonate;
(3B) a hydrocarbonating step of blowing carbon dioxide to a slurry containing the rough lithium carbonate to obtain a lithium hydrogen carbonate solution;
(3C) a decarbonation step of heating the lithium hydrogen carbonate solution to obtain purified lithium carbonate; and
(3D) an acid solution dissolution step of dissolving the purified lithium carbonate in an acid solution to obtain a third lithium containing solution.

2. The method for producing lithium hydroxide according to claim 1, comprising
a neutralization step after the lithium elution step and before the carbonating step in the impurity removal step, wherein
the second lithium containing solution used in the carbonating step is a post-neutralization liquid produced by adding a neutralizer in the neutralization step.

3. The method for producing lithium hydroxide according to claim 1, comprising
an oxidation step and a neutralization step after the lithium elution step and before the carbonating step in the impurity removal step, wherein
the second lithium containing solution used in the carbonating step is a post-neutralization liquid produced by adding a neutralizer to a post-oxidation liquid in the neutralization step, and
the post-oxidation liquid is produced by adding an oxidant in the oxidation step.

4. The method for producing lithium hydroxide according to any one of claims 1 to 3, comprising
an ion exchange step after the acid solution dissolution step and before the conversion step, wherein
the third lithium containing solution used in the conversion step is obtained by bringing the lithium salt solution obtained in the acid solution dissolution step into contact with an ion-exchange resin in the ion exchange step.

5. The method for producing lithium hydroxide according to any one of claims 1 to 4, comprising
a crystallization step of solidifying the lithium hydroxide dissolved in the lithium hydroxide containing solution after the conversion step.

6. The method for producing lithium hydroxide according to any one of claims 1 to 5, wherein
a part of or all of the second lithium containing solution is repeatedly used in the lithium elution step.
